(19) Europäisches Patentamt
European Patent Office
Office européen des brevets

(11) **EP 1 932 734 B1**

(12) **FASCICULE DE BREVET EUROPEEN**

(45) Date de publication et mention
de la délivrance du brevet:
**10.02.2010 Bulletin 2010/06**

(51) Int Cl.:
***B60T 8/172*** *(2006.01)*   ***G01M 17/02*** *(2006.01)*

(21) Numéro de dépôt: **07122891.0**

(22) Date de dépôt: **11.12.2007**

(54) **Procédé d'estimation d'un risque de défaut de liaison au sol d'un véhicule automobile**

Verfahren zum Einschätzen des Fehlerrisikos der Bodenhaftung eines Kraftfahrzeugs

Method for estimating a risk of failure in the ground contact of a motor vehicle

(84) Etats contractants désignés:
**DE FR IT**

(30) Priorité: **13.12.2006 FR 0655483**

(43) Date de publication de la demande:
**18.06.2008 Bulletin 2008/25**

(73) Titulaires:
• **Société de Technologie Michelin**
  **63000 Clermont-Ferrand (FR)**
• **Michelin Recherche et Technique S.A.**
  **1763 Granges-Paccot (CH)**

(72) Inventeur: **Bertrand, David**
**25000 Besancon (FR)**

(74) Mandataire: **de la Bigne, Guillaume Michel Marie**
**et al**
**Cabinet Lhermet La Bigne & Remy**
**11, boulevard de Sébastopol**
**75001 Paris (FR)**

(56) Documents cités:
**EP-A- 0 841 550      EP-A- 1 132 271**
**EP-A- 1 457 388      EP-A1- 1 076 235**
**EP-A2- 1 273 496      WO-A-2004/000620**
**DE-A1- 10 107 862      FR-A1- 2 815 712**
**US-A- 5 502 433      US-A1- 2005 257 609**

**Description**

La présente invention concerne un procédé d'estimation d'un risque de défaut de liaison au sol d'un véhicule automobile, ce défaut étant lié à l'état d'adhérence d'au moins un pneumatique de ce véhicule.

Certains véhicules automobiles sont équipés de dispositifs d'assistance à la conduite ayant pour but d'améliorer la tenue de route du véhicule. Ces dispositifs d'assistance peuvent être classés dans deux catégories. La première catégorie comprend les dispositifs qui agissent de manière active sur le comportement du véhicule pour suppléer le conducteur en cas de situation dangereuse. Dans cette première catégorie, on peut citer par exemple les systèmes actifs de type anti-blocage de roues (ABS) ou de type gestion de stabilité (ESP). La seconde catégorie comprend des dispositifs informatifs qui ont pour but d'alerter le conducteur que la situation dans laquelle il se trouve est potentiellement dangereuse.

L'invention concerne plus particulièrement les dispositifs de cette seconde catégorie qui ont pour but d'estimer un risque de défaut de liaison au sol du véhicule et d'en informer le conducteur.

Pour estimer ce risque, on peut utiliser de nombreux paramètres connus, notamment la température extérieure. Un capteur de température équipant un véhicule permet d'alerter le conducteur dès que la température extérieure passe en dessous d'un certain seuil susceptible de permettre la formation de verglas sur la route.

Cette estimation du risque de défaut de liaison au sol est simple mais ne permet pas d'obtenir des résultats précis et fiables. En effet, cette estimation fait l'hypothèse qu'en dessous d'une certaine température, la chaussée comporte du verglas, sans toutefois vérifier cette hypothèse. Ainsi, il est courant que le véhicule déclenche une alerte bien qu'il n'existe aucun risque réel de défaut de liaison au sol. De plus, dans certaines situations, la mesure de température ne permet pas de détecter un risque de défaut de liaison au sol pourtant existant, par exemple en cas de présence d'huile sur la route ou en cas d'usure importante des pneumatiques.

D'autres paramètres que la température peuvent être utilisés pour estimer le risque de perte de liaison au sol, mais aucun ne permet une estimation efficace et fiable en toutes circonstances.

L'invention a pour but de proposer un procédé d'estimation d'un risque de défaut de liaison au sol d'un véhicule automobile qui soit plus fiable et plus performant que les procédés connus.

A cet effet, l'invention a pour objet un procédé d'estimation d'un risque de défaut de liaison au sol d'un véhicule automobile, ce défaut étant lié à l'état d'adhérence d'au moins un pneumatique de ce véhicule, caractérisé en ce qu'on estime le risque en fonction des trois paramètres suivants :

- un potentiel d'adhérence maximal $\mu_{max}$ de pneumatique,
- un pourcentage d'utilisation $P_u$ du potentiel d'adhérence maximal de pneumatique, et
- une grandeur $P_s$ liée à un risque d'hydroplanage de pneumatique, notamment une perte de surface du pneumatique.

En considérant un pneumatique subissant

- une résultante $F_x$ d'efforts longitudinaux (comprenant essentiellement les efforts d'accélération et de freinage),
- une résultante $F_y$ d'efforts latéraux (comprenant essentiellement les efforts de poussée de dérive) et
- une résultante $F_z$ d'efforts verticaux,

on rappellera les définitions suivantes.

On définit, à un instant donné, **le potentiel d'adhérence $\mu$ du pneumatique** comme étant le rapport de la résultante des efforts longitudinaux et latéraux sur la résultante d'efforts verticaux :

$$\mu = \frac{\sqrt{F_x^2 + F_y^2}}{F_z}.$$

**On définit, à un instant donné, le potentiel d'adhérence maximal $\mu_{max}$ du pneumatique sur le sol** comme étant la valeur maximale que le potentiel d'adhérence $\mu$ peut prendre. Ce potentiel d'adhérence maximal $\mu_{max}$ dépend de plusieurs facteurs dont la nature du sol (de la chaussée) ou son état d'usure, la température du sol et du pneumatique, ou encore de facteurs météorologiques impliquant, par exemple, la présence d'eau ou de neige sur le sol.

On définit, à un instant donné, **le pourcentage d'utilisation $P_u$ du potentiel d'adhérence maximal $\mu_{max}$ du pneumatique** par la formule suivante :

$$P_u = \frac{\mu}{\mu_{max}} \cdot 100$$

Ce pourcentage d'utilisation $P_u$ correspond au pourcentage que représente le potentiel d'adhérence réellement utilisé par rapport au potentiel d'adhérence maximal. Cette valeur varie entre 0 et 100 %. Bien entendu, plus cette valeur est proche de 100 % et plus le risque de perte d'adhérence du pneumatique est grand.

On définit **l'aire de contact du pneumatique** comme étant la zone du pneumatique en contact avec le sol.

On définit **la grandeur $P_s$** comme une grandeur liée à un risque d'hydroplanage, c'est-à-dire liée à la perte de surface de l'aire de contact du pneumatique avec le sol. La perte de surface est le pourcentage de l'aire de contact du pneumatique qui n'est pas en contact direct avec le sol.

En effet, lors du roulage du pneumatique sur un sol sec et dans des conditions d'utilisation normales, la totalité de l'aire de contact du pneumatique est en contact direct avec le sol. En revanche, lors du roulage du pneumatique sur un sol détrempé, un phénomène d'hydroplanage peut conduire à ce qu'une partie de l'aire de contact du pneumatique ne soit pas en contact direct avec le sol mais avec une fine pellicule d'eau. La perte de surface est égale à 0 % en cas de roulage sur un sol sec et peut atteindre 100 % en cas de perte totale de contact direct du pneumatique avec le sol.

Le potentiel d'adhérence maximal $\mu_{max}$, le pourcentage d'utilisation $P_u$ du potentiel d'adhérence maximal $\mu_{max}$ et la grandeur $P_s$ sont des paramètres connus et les procédés pour les mesurer aussi. Ainsi, on connaît dans l'état de la technique, notamment des documents WO 03/066399, WO 03/066400, WO 2004/000620 et US 5,502,433 :

- des procédés permettant de mesurer le potentiel d'adhérence maximal $\mu_{max}$ d'un pneumatique, ces procédés utilisant par exemple des mesures obtenues au moyen de capteurs d'efforts,
- des procédés permettant de mesurer le pourcentage d'utilisation $P_u$ du potentiel d'adhérence maximal $\mu_{max}$, ces procédés ne requérant pas nécessairement de mesurer au préalable le potentiel d'adhérence maximal du pneumatique, et
- des procédés permettant de mesurer une grandeur $P_s$ liée à un risque d'hydroplanage du pneumatique.

Conformément à l'invention, il a été identifié que l'ensemble de paramètres comprenant le potentiel d'adhérence maximal $\mu_{max}$, le pourcentage d'utilisation $P_u$ du potentiel d'adhérence maximal $\mu_{max}$ et la grandeur $P_s$ liée à un risque d'hydroplanage du pneumatique constitue une sélection de paramètres bien adaptée à l'estimation d'un risque de défaut de liaison au sol d'un véhicule automobile. Cette sélection d'un nombre réduit de paramètres permet d'appréhender la plupart des situations présentant un risque de perte d'adhérence sans risquer le déclenchement de fausses alertes.

La combinaison de mesures de ces trois paramètres est très avantageuse pour l'estimation d'un risque global de défaut de liaison au sol puisque ces paramètres sont complémentaires, chacun étant lié à un risque de perte d'adhérence particulier.

Le potentiel d'adhérence maximal $\mu_{max}$ de pneumatique est particulièrement adapté pour indiquer au conducteur qu'en conséquence de conditions météorologiques particulières, de l'usure du revêtement du sol ou de toute autre raison non forcément liée à une sollicitation extrême des pneumatiques, l'adhérence sur le sol d'au moins un des pneumatiques du véhicule est faible.

Le pourcentage d'utilisation Pu du potentiel d'adhérence maximal de pneumatique est particulièrement adapté pour indiquer au conducteur que son type de conduite sollicite fortement les pneumatiques au risque d'entraîner une perte d'adhérence. Dans ce cas, l'adhérence des pneumatiques sur le sol n'est pas nécessairement faible, mais les sollicitations causées par la conduite sont fortes par rapport au potentiel d'adhérence disponible. La marge de sécurité estimée est faible.

La grandeur $P_s$ liée à un risque d'hydroplanage de pneumatique est particulièrement adaptée pour, lorsque le sol est mouillé et la vitesse du véhicule est élevée, prévenir le conducteur qu'une sollicitation inadaptée des pneumatiques peut provoquer une perte de surface de contact entre les pneumatiques et le sol par effet d'hydroplanage.

Pour obtenir une estimation de qualité du risque de défaut de liaison au sol, il est essentiel de mesurer chacun de ces trois paramètres complémentaires. En effet, ces trois paramètres sont indépendants et ne peuvent être déduits les uns des autres.

Un procédé selon l'invention peut en outre comprendre une ou plusieurs des caractéristiques suivantes.

- On estime le risque de défaut de liaison au sol en comparant, pour chaque paramètre, une valeur de référence Vr fonction d'au moins une mesure du paramètre, avec au moins un seuil $S^n$ lié au paramètre et séparant des intervalles de valeurs à risque et sans risque.
- Le seuil $S^n$ varie en fonction de conditions de roulage du véhicule, de préférence en fonction de la charge du véhicule et/ou de sa vitesse. Ainsi, de préférence, on peut faire varier le seuil en fonction du niveau de charge du véhicule ou de la vitesse du véhicule. Cela permet alors de lier à l'énergie cinétique du véhicule le délai pour alerter le conducteur du véhicule du risque estimé de défaut de liaison au sol. Plus l'énergie cinétique du véhicule est élevée, plus il est souhaitable d'alerter le conducteur rapidement.

- Si, pour au moins un paramètre, la valeur de référence $V_r$ franchit le seuil $S^n$ pour atteindre l'intervalle à risque, on informe le conducteur du véhicule automobile du risque estimé de défaut de liaison au sol. En étant ainsi informé du risque de défaut de liaison au sol, le conducteur du véhicule automobile peut modifier sa conduite pour réduire ce risque. Chaque paramètre étant lié à un risque particulier, il est important d'avertir le conducteur du risque de défaut de liaison au sol même si un seul des trois paramètres prend une valeur à risque. Il n'est pas nécessaire d'attendre que chacun des trois paramètres prennent une valeur à risque pour avertir le conducteur.

- Si, pour au moins un paramètre, la valeur de référence $V_r$ franchit le seuil $S^n$ pour atteindre l'intervalle à risque et si, au cours du roulage du véhicule sur une distance prédéterminée $L^n$ mesurée à compter de la date de franchissement du seuil $S^n$, la valeur de référence $V_r$ reste dans cet intervalle à risque, on informe le conducteur du véhicule automobile du risque estimé de défaut de liaison au sol. Etant donné que la valeur de référence est généralement bruitée (car la mesure du paramètre choisi obtenue par les dispositifs classiques -comprenant généralement des moyens de mesure de couple ou de vibrations- est généralement bruitée), il est préférable de n'informer le conducteur du risque estimé de défaut de liaison au sol que lorsque la valeur de référence reste dans l'intervalle de valeurs à risque pendant une durée correspondant au roulage du véhicule sur la distance prédéterminée. Ainsi, on évite autant que possible une alerte intempestive.

- On définit la valeur de référence $V_r$ comme étant égale à une seule mesure du paramètre choisi. Cette définition de valeur de référence est particulièrement simple.

- Lorsque le paramètre P est le potentiel d'adhérence maximal $\mu_{max}$ de pneumatique ou le pourcentage d'utilisation $P_u$ du potentiel d'adhérence maximal $\mu_{max}$ de pneumatique, on définit la valeur de référence $V_r$ par une combinaison linéaire de plusieurs mesures du paramètre, par exemple deux ou quatre, les différentes mesures étant relatives à différents pneumatiques du véhicule. Ainsi, en prenant en compte plusieurs mesures pour définir la valeur de référence, on limite l'influence d'une mesure anormalement bruitée et on fiabilise la pertinence d'une alerte du conducteur.

- De préférence, la combinaison linéaire des mesures est choisie parmi

    o une moyenne des mesures, et
    o un barycentre des mesures tel que chaque mesure est pondérée par une valeur de charge verticale $F_z$ supportée par le pneumatique correspondant à la mesure.

Dans ce dernier cas, grâce à la pondération des mesures du paramètre choisi par les valeurs des charges verticales, la valeur de référence est principalement influencée par la mesure du paramètre qui présente la plus grande amplitude et le plus grand rapport :

$$\frac{\text{amplitude du signal du paramètre choisi}}{\text{bruit polluant ce signal}}$$

c'est-à-dire par la mesure la plus précise et la plus fiable. Ainsi, l'influence du bruit de mesure sur la valeur de référence est limitée, notamment lorsque le véhicule est en cours de virage provoquant un transfert de charges.

- Lorsque le paramètre P est lié à une perte de surface $P_s$ du pneumatique, on définit la valeur de référence $V_r$ comme étant la valeur maximale de plusieurs mesures du paramètre $P_s$, par exemple deux ou quatre, les différentes mesures étant relatives à différents pneumatiques du véhicule. En effet, la perte de surface de contact de l'un des pneumatiques du véhicule est considérée comme dangereuse donc pertinente pour influencer la conduite du véhicule. Ainsi, c'est le pneumatique dont la perte d'adhérence constatée est la plus grande qui doit être privilégié pour estimer le risque de perte d'adhérence et donc de défaut la liaison au sol du véhicule.

- Chaque mesure est effectuée par un dispositif choisi parmi

    o un dispositif muni de moyens fixes découplés en rotation du pneumatique, et
    o un dispositif muni de moyens embarqués dans un organe d'un ensemble tournant, cet ensemble comprenant un pneumatique du véhicule et/ou au moins un organe couplé en rotation avec le pneumatique.

- On estime un premier niveau de risque de défaut de liaison au sol en comparant, pour au moins un paramètre, la valeur de référence $V_r$ avec un premier seuil $S^1$ et on estime un second niveau de risque de défaut de liaison au sol en comparant la valeur de référence $V_r$ avec un second seuil $S^2$, le risque du second niveau étant plus élevé que le risque du premier niveau.

L'invention sera mieux comprise à la lecture de la description qui va suivre, faite uniquement à titre d'exemple.

Le procédé d'estimation d'un risque de défaut de liaison au sol d'un véhicule automobile, selon l'invention, consiste à estimer le risque en fonction des trois paramètres P déjà mentionnés précédemment :

- le potentiel d'adhérence maximal $\mu_{max}$ de pneumatique,
- le pourcentage d'utilisation $P_u$ du potentiel d'adhérence maximal de pneumatique, et
- la grandeur $P_s$ liée à un risque d'hydroplanage de pneumatique, notamment la perte de surface du pneumatique.

Plus précisément, on estime le risque de défaut de liaison au sol en comparant, pour chaque paramètre P, une valeur de référence Vr fonction d'au moins une mesure du paramètre, avec au moins un seuil $S^n$ lié au paramètre et séparant des intervalles de valeurs à risque et sans risque.

Le premier paramètre P mesuré est le potentiel d'adhérence maximal $\mu_{max}$ de pneumatique : P = $\mu_{max}$.

On définit une valeur de référence $V_r$ en fonction d'au moins une mesure de P = $\mu_{max}$

### Premier cas.

On ne dispose, à un instant donné, que d'une seule mesure de $\mu_{max}$ Cette mesure est fournie par exemple par un dispositif muni de moyens fixes découplés en rotation de chaque pneumatique du véhicule. En variante, la mesure pourrait être fournie par un dispositif muni de moyens embarqués dans un organe d'un ensemble tournant, cet ensemble comprenant un pneumatique du véhicule et/ou au moins un organe couplé en rotation avec un pneumatique du véhicule.

Dans ce premier cas, on définit la valeur de référence $V_r$ comme étant égale à la seule mesure du paramètre $\mu_{max}$ choisi et l'on a la relation R1 suivante :

$$V_r = \mu_{max} \qquad\qquad (R1)$$

### Second cas.

On dispose, à un instant donné, de plusieurs mesures de $\mu_{max}$ (au moins deux mesures), les différentes mesures étant relatives à différents pneumatiques du véhicule, par exemple deux paires de pneumatiques portés respectivement par deux essieux avant et arrière.

Ces quatre mesures peuvent être fournies, par exemple, par quatre dispositifs munis chacun de moyens embarqués dans un organe d'un ensemble tournant tel que défini au premier cas. En variante, au moins une des mesures pourrait être fournie par un dispositif muni de moyens fixes découplés en rotation de chaque pneumatique du véhicule.

Dans ce second cas, on définit la valeur de référence $V_r$ comme étant une combinaison linéaire des quatre mesures du paramètre $\mu_{max}$. De préférence, cette combinaison linéaire correspond à un barycentre des mesures tel que chaque mesure est pondérée par une valeur de charge verticale $F_z$ supportée par le pneumatique correspondant à la mesure. On a alors la relation R2 suivante :

$$V_r = \mu_{max\,decl} = \frac{1}{\sum_{FL,FR,RL,RR} F_Z^k} \cdot \sum_{FL,FR,RL,RR} F_Z^k \cdot \mu_{max}^k \qquad (R2)$$

où FL indique le pneumatique avant gauche, FR le pneumatique avant droit, RL le pneumatique arrière gauche et RR le pneumatique arrière droit.

Si l'on ne dispose que de deux mesures de $\mu_{max}$, par exemple relatives à deux pneumatiques d'un même essieu avant ou arrière, la relation R2 ci-dessus devient alors la relation R3 suivante :

$$V_r = \mu_{max\,decl} = \frac{1}{F_Z^L + F_Z^R} \left( F_Z^L \cdot \mu_{max}^L + F_Z^R \cdot \mu_{max}^R \right) \quad (R3)$$

où l'exposant L indique le pneumatique gauche et l'exposant R indique le pneumatique droit.

Si les charges $F_z$ ne sont pas connues, on peut définir la valeur de référence $V_r$ comme étant la moyenne des mesures. On a alors la relation R4 suivante (dans le cas de deux mesures relatives par exemple à deux pneumatiques d'un même essieu) :

$$V_r = \mu_{\max\,decl} = \frac{1}{2}.\left(\mu_{\max}^{L} + \mu_{\max}^{R}\right) \qquad\qquad \text{(R4)}$$

où l'exposant L indique le pneumatique gauche et l'exposant R indique le pneumatique droit.

Après avoir défini la valeur de référence $V_r$ comme proposé ci-dessus, on estime un risque de défaut de liaison au sol en comparant la valeur de référence $V_r$ avec au moins un seuil $S^n$ séparant un intervalle de valeurs estimées à risque d'un intervalle de valeurs estimées sans risque.

Dans l'exemple décrit, on retient les deux seuils suivants :

- $S^1 = \mu^1_{maxS}$ pertinent pour discriminer des valeurs sans risque et à risque dans le cas d'un sol formé par une route potentiellement dangereuse (par exemple du fait de son tracé sinueux ou de la qualité réduite du revêtement de la route) sur laquelle le conducteur doit adapter fortement sa conduite.
- $S^2 = \mu^2_{maxS}$ pertinent pour discriminer des valeurs sans risque et à risque dans le cas d'un sol formé par une route très glissante (par exemple du fait de la présence de neige et/ou de verglas sur la route).

Ainsi, on estime un premier niveau de risque de défaut de liaison au sol en comparant la valeur de référence $V_r$ avec le premier seuil $S^1$ et on estime un second niveau de risque de défaut de liaison au sol en comparant la valeur de référence $V_r$ avec le second seuil $S^2$. On notera que le risque du second niveau (présence de neige et/ou de verglas sur la route) est plus élevé que le risque du premier niveau (tracé sinueux ou qualité réduite du revêtement de la route).

Toutefois, en variante, le nombre de seuil $S^n$ pourrait être limité à un seul ou supérieur à deux.

Lorsque,

- d'une part, la valeur de référence $V_r$ franchit un des seuils $S^n$ pour atteindre un intervalle de valeurs à risque,
- et d'autre part, au cours du roulage du véhicule sur une distance prédéterminée $L^n$ mesurée à compter de la date de franchissement du seuil $S^n$, la valeur de référence $V_r$ reste dans cet intervalle à risque,

on informe le conducteur du véhicule du risque estimé de défaut de liaison au sol. Cette information peut être fournie au conducteur par des moyens d'alerte classiques visuels et/ou sonores, éventuellement graduels.

Dans l'exemple décrit $L^n = L^1 = L^2 = 50m$.

Toutefois, en variante, l'information du conducteur peut être déclenchée dès que la valeur de référence $V_r$ franchit un des seuils $S^n$ pour atteindre un intervalle à risque, ceci sans attendre le parcours d'une distance prédéterminée.

Dans l'exemple décrit les seuils sont prédéterminés : par exemple : $S^1 = \mu^1_{maxS} = 0.5$ et $S^2 = \mu^2_{maxS} = 0.3$.

Toutefois, en variante, au moins un des seuils $S^n$ peut varier en fonction de conditions de roulage du véhicule, de préférence en fonction de la charge du véhicule et/ou de sa vitesse.

Le deuxième paramètre P mesuré est un pourcentage d'utilisation $P_u$ du potentiel d'adhérence maximal de pneumatique : $P = P_u$.

On définit une valeur de référence $V_r$ en fonction d'au moins une mesure de $P = P_u$, ceci de façon analogue à ce qui a été décrit pour $P = \mu_{max}$, en remplaçant dans les relations R1 à R4 $\mu_{max}$ par $P_u$.

Enfin, de façon analogue au cas $P = \mu_{max}$, on estime un risque de défaut de liaison au sol en comparant la valeur de référence $V_r$ avec au moins un seuil $S^n$ séparant des intervalles de valeurs à risque et sans risque.

On pourra choisir deux seuils prédéterminés $S^1 = P_u{}^1{}_S$ et $S^2 = P_u{}^2{}_S$ compris respectivement entre 60 et 80% (pour $S^1$) et 80 et 90% (pour $S^2$). Par exemple : $S^1 = P_u{}^1{}_S = 70\%$ et $S^2 = P_u{}^2{}_S = 85\%$.

Enfin, le troisième paramètre P mesuré est lié à la perte de surface $P_s$ de pneumatique : $P = P_s$.

On définit une valeur de référence $V_r$ en fonction d'au moins une mesure de $P = P_s$.

## Premier cas.

On ne dispose, à un instant donné, que d'une seule mesure de $P_s$. De façon analogue aux cas $P = \mu_{max}$ et $P = P_u$, on définit la valeur de référence $V_r$ comme étant égale à la seule mesure du paramètre $P_s$ choisi.

**Second cas.**

On dispose, à un instant donné, de plusieurs mesures de $P_s$ (au moins deux mesures), les différentes mesures étant relatives à différents pneumatiques du véhicule, par exemple (comme dans les cas $P = \mu_{max}$ et $P = P_u$) une ou deux paires de pneumatiques portés par un ou deux essieux avant et/ou arrière.

On définit alors la valeur de référence $V_r$ comme étant la valeur maximale des mesures du paramètre $P_s$ choisi, par exemple conformément à la relation R5 suivante établie pour le cas où l'on dispose de quatre mesures :

$$V_r = Ps_{decl} = \max_{FL,FR,RL,RR}\left(Ps^k\right)$$

où FL indique le pneumatique avant gauche, FR le pneumatique avant droit, RL le pneumatique arrière gauche et RR le pneumatique arrière droit.

Enfin, de façon analogue aux cas $P = \mu_{max}$ et $P = P_u$, on estime un risque de défaut de liaison au sol en comparant la valeur de référence $V_r$ avec au moins un seuil $S^n$ séparant des intervalles de valeurs à risque et sans risque.

On pourra choisir deux seuils prédéterminés $S^1 = P_s{}^1{}_S$ et $S^2 = p_s{}^2{}_S$ compris respectivement entre 30 et 50% (pour $S^1$) et 60 et 80% (pour $S^2$). Par exemple : $S^1 = P_s{}^1{}_S = 40\%$ et $S^2 = P_s{}^2{}_S = 70\%$.

Dans le mode de réalisation de l'invention qui vient d'être décrit, on informe le conducteur du véhicule du risque estimé de défaut de liaison au sol dès que la valeur de référence $V_r$ de l'un quelconque des trois paramètres franchit un des seuils $S^n$ pour atteindre un intervalle de valeurs à risque.

## Revendications

1. Procédé d'estimation d'un risque de défaut de liaison au sol d'un véhicule automobile, ce défaut étant lié à l'état d'adhérence d'au moins un pneumatique de ce véhicule, **caractérisé en ce qu'**on estime le risque en fonction des trois paramètres suivants :

   - un potentiel d'adhérence maximal $\mu_{max}$ de pneumatique,
   - un pourcentage d'utilisation $P_u$ du potentiel d'adhérence maximal de pneumatique, et
   - une grandeur $P_s$ liée à un risque d'hydroplanage de pneumatique, notamment une perte de surface du pneumatique.

2. Procédé selon la revendication 1, dans lequel on estime le risque de défaut de liaison au sol en comparant, pour chaque paramètre, une valeur de référence Vr fonction d'au moins une mesure du paramètre, avec au moins un seuil $S^n$ lié au paramètre et séparant des intervalles de valeurs à risque et sans risque.

3. Procédé selon la revendication 2, dans lequel le seuil $S^n$ varie en fonction de conditions de roulage du véhicule, de préférence en fonction de la charge du véhicule et/ou de sa vitesse.

4. Procédé selon la revendication 2 ou 3, dans lequel, si, pour au moins un paramètre, la valeur de référence $V_r$ franchit le seuil $S^n$ pour atteindre l'intervalle à risque, on informe le conducteur du véhicule automobile du risque estimé de défaut de liaison au sol.

5. Procédé selon la revendication 2 ou 3, dans lequel, si, pour au moins un paramètre, la valeur de référence $V_r$ franchit le seuil $S^n$ pour atteindre l'intervalle à risque et si, au cours du roulage du véhicule sur une distance prédéterminée $L^n$ mesurée à compter de la date de franchissement du seuil $S^n$, la valeur de référence $V_r$ reste dans cet intervalle à risque, on informe le conducteur du véhicule automobile du risque estimé de défaut de liaison au sol.

6. Procédé selon l'une quelconque des revendications 2 à 5, dans lequel on définit la valeur de référence $V_r$ d'un paramètre comme étant égale à une seule mesure du paramètre.

7. Procédé selon l'une quelconque des revendications 2 à 5, dans lequel, lorsque le paramètre P est le potentiel d'adhérence maximal $\mu_{max}$ de pneumatique ou le pourcentage d'utilisation $P_u$ du potentiel d'adhérence maximal $\mu_{max}$ de pneumatique, on définit la valeur de référence $V_r$ par une combinaison linéaire de plusieurs mesures du paramètre, par exemple deux ou quatre, les différentes mesures étant relatives à différents pneumatiques du véhicule.

**8.** Procédé selon la revendication 7, dans lequel la combinaison linéaire des mesures est choisie parmi

- une moyenne des mesures, et
- un barycentre des mesures tel que chaque mesure est pondérée par une valeur de charge verticale $F_z$ supportée par le pneumatique correspondant à la mesure.

**9.** Procédé selon l'une quelconque des revendications 2 à 5, dans lequel, lorsque le paramètre P est lié à une perte de surface $P_s$ du pneumatique, on définit la valeur de référence $V_r$ comme étant la valeur maximale de plusieurs mesures du paramètre $P_s$, par exemple deux ou quatre, les différentes mesures étant relatives à différents pneumatiques du véhicule.

**10.** Procédé selon l'une quelconque des revendications 2 à 9, dans lequel chaque mesure est effectuée par un dispositif choisi parmi

- un dispositif muni de moyens fixes découplés en rotation du pneumatique, et
- un dispositif muni de moyens embarqués dans un organe d'un ensemble tournant, cet ensemble comprenant un pneumatique du véhicule et/ou au moins un organe couplé en rotation avec le pneumatique.

**11.** Procédé selon l'une quelconque des revendications 2 à 10, dans lequel on estime un premier niveau de risque de défaut de liaison au sol en comparant, pour au moins un paramètre, la valeur de référence $V_r$ avec un premier seuil $S^1$ et on estime un second niveau de risque de défaut de liaison au sol en comparant la valeur de référence $V_r$ avec un second seuil $S^2$, le risque du second niveau étant plus élevé que le risque du premier niveau.

**Claims**

**1.** A method of estimating a risk of a lack of connection with the ground for a motor vehicle, this lack being associated with the grip state of at least one tire of the vehicle, **characterized in that** the risk is estimated as a function of the following three parameters:

· a maximum grip potential $\mu_{max}$ of the tire;
· a utilization percentage $P_u$ of the maximum grip potential of the tire; and
· a magnitude $P_S$ associated with a risk of the tire hydroplaning, in particular a loss of tire area.

**2.** A method according to claim 1, in which the risk of a lack of connection with the ground is estimated by comparing, for each parameter, a corresponding reference value $V_r$ that is a function of at least one measurement of the parameter with at least one threshold $S^n$ associated with the parameter and separating a range of values that are risky from a range of values without risk.

**3.** A method according to claim 2, in which the threshold $S^n$ varies as a function of the running conditions of the vehicle, preferably as a function of the load of the vehicle and/or of its speed.

**4.** A method according to claim 2 or 3, in which, if for at least one parameter, the reference value $V_r$ crosses the threshold $S^n$ to reach the risky range, the driver of the motor vehicle is informed of the estimated risk of a lack of connection with the ground.

**5.** A method according to claim 2 or 3, in which, if for at least one parameter, the reference value $V_r$ crosses the threshold $S^n$ to reach the risky range, and if the reference value $V_r$ remains in said risky range while the vehicle is running along a predetermined distance $L^n$ measured from the time at which the threshold $S^n$ was crossed, then the driver of the motor vehicle is informed of the estimated risk of a lack of connection with the ground.

**6.** A method according to any claim 2 to 5, in which the reference value $V_r$ of a parameter is defined as being equal to a single measurement of the parameter.

**7.** A method according to any claim 2 to 5, in which, when the parameter P is the maximum grip potential $\mu_{max}$ of the tire or the utilization percentage $P_u$ of the maximum grip potential $\mu_{max}$ of the tire, then the reference value $V_r$ is

defined by a linear combination of a plurality of measurements of the parameter, e.g. two or four measurements, the different measurements relating to different tires of the vehicle.

8. A method according to claim 7, in which the linear combination of measurements is selected from:

· an average of the measurements; and
· a bary center of the measurements such that each measurement is weighted by a value for the vertical load $F_Z$ supported by the tire corresponding to the measurement.

9. A method according to any claim 2 to 5, in which, when the parameter P is associated with a loss of tire area $P_S$, the reference value $V_r$ is defined as being the maximum value of a plurality of measurements of the parameter $P_S$, e.g. two or four measurements, the different measurements relating to different tires of the vehicle.

10. A method according to any claim 2 to 9, in which each measurement is performed by a device selected from:

· a device provided with stationary means that are decoupled in rotation from the tire; and
· a device provided with on-board means in a member of a rotary assembly comprising a tire of the vehicle and/or a member coupled to rotate with the tire.

11. A method according to any claim 2 to 10, in which a first level of risk of a lack of connection with the ground is estimated by comparing, for at least one parameter, the reference value $V_r$ with a first threshold $S^1$, and a second level of risk of a lack of connection with the ground is estimated by comparing the reference value $V_r$ with a second threshold $S^2$, the risk of the second level being higher than the risk of the first level.

## Patentansprüche

1. Verfahren zur Einschätzung des Risikos eines Mangels an Bodenkontakt eines Kraftfahrzeugs, wobei dieser Mangel mit dem Haftungszustand zumindest eines Reifens dieses Fahrzeugs in Zusammenhang steht, **dadurch gekennzeichnet, dass** das Risiko in Abhängigkeit von den folgenden drei Parametern eingeschätzt wird:

- einem maximalen Reifenhaftungsvermögen $\mu_{max}$,
- einem Nutzungsprozentsatz $P_u$ des maximalen Reifenhaftungsvermögens, und
- einer Größe $P_s$, die mit einem Risiko eines Aquaplanings eines Reifens, insbesondere eines Oberflächenverlusts des Reifens, in Zusammenhang steht.

2. Verfahren nach Anspruch 1, bei dem das Risiko eines Mangels an Bodenkontakt eingeschätzt wird, indem für jeden Parameter ein Bezugswert $V_r$ in Abhängigkeit von zumindest einer Messung des Parameters verglichen wird mit zumindest einem Schwellenwert $S^n$, der mit dem Parameter in Zusammenhang steht und Intervalle von Werten mit Risiko und ohne Risiko trennt.

3. Verfahren nach Anspruch 2, bei dem der Schwellenwert $S^n$ in Abhängigkeit von Fahrbedingungen des Fahrzeugs, bevorzugt in Abhängigkeit von der Last des Fahrzeugs und/oder dessen Geschwindigkeit, variiert.

4. Verfahren nach Anspruch 2 oder 3, bei dem, falls für zumindest einen Parameter der Bezugswert $V_r$ den Schwellenwert $S^n$ überschreitet, so dass er das Risikointervall erreicht, der Fahrer des Kraftfahrzeugs über das geschätzte Risiko eines Mangels an Bodenkontakt in Kenntnis gesetzt wird.

5. Verfahren nach Anspruch 2 oder 3, bei dem, falls für zumindest einen Parameter der Bezugswert $V_r$ den Schwellenwert $S^n$ überschreitet, so dass er das Risikointervall erreicht, und falls im Laufe der Fahrt des Fahrzeugs über eine vorgegebene Distanz $L^n$, die ab dem Zeitpunkt des Überschreitens des Schwellenwerts $S^n$ gemessen wird, der Referenzwert $V_r$ in diesem Risikointervall bleibt, der Fahrer des Kraftfahrzeugs über das geschätzte Risiko eines Mangels an Bodenkontakt in Kenntnis gesetzt wird.

6. Verfahren nach einem der Ansprüche 2 bis 5, bei dem der Bezugswert $V_r$ eines Parameters als einer einzigen Messung des Parameters gleich definiert wird.

7. Verfahren nach einem der Ansprüche 2 bis 5, bei dem, wenn der Parameter P das maximale Reifenhaftungsver-

mögen $\mu_{max}$ oder der Nutzungsprozentsatz $P_u$ des maximalen Reifenhaftungsvermögens $\mu_{max}$ ist, der Bezugswert $V_r$ durch eine lineare Kombination aus mehreren Messungen des Parameters, beispielsweise zwei oder vier, definiert wird, wobei sich die verschiedenen Messungen auf verschiedene Reifen des Fahrzeugs beziehen.

8. Verfahren nach Anspruch 7, bei dem die lineare Kombination der Messungen ausgewählt wird aus

- einem Mittelwert der Messungen, und
- einem Baryzentrum der Messungen derart, dass jede Messung gewichtet wird mittels eines Werts vertikaler Last $F_z$, die von dem Reifen getragen wird, welcher der Messung entspricht.

9. Verfahren nach einem der Ansprüche 2 bis 5, bei dem, wenn der Parameter P mit einem Oberflächenverlust $P_s$ des Reifens in Zusammenhang steht, der Referenzwert $V_r$ definiert wird als der Höchstwert aus mehreren Messungen des Parameters $P_s$, beispielsweise zwei oder vier, wobei sich die verschiedenen Messungen auf verschiedene Reifen des Fahrzeugs beziehen.

10. Verfahren nach einem der Ansprüche 2 bis 9, bei dem jede Messung durch eine Vorrichtung erfolgt, die ausgewählt wird aus

- einer Vorrichtung, ausgestattet mit ortsfesten Mitteln, die vom Reifen rotationsentkoppelt werden, und
- einer Vorrichtung, ausgestattet mit Mitteln, die in ein Organ einer Dreheinheit eingelassen sind, wobei diese Einheit einen Reifen des Fahrzeugs und/oder zumindest ein mit dem Reifen rotationsgekoppeltes Organ umfasst.

11. Verfahren nach einem der Ansprüche 2 bis 10, bei dem eine erste Risikostufe eines Mangels an Bodenkontakt eingeschätzt wird, indem für zumindest einen Parameter der Bezugswert $V_r$ mit einem ersten Schwellenwert $S^1$ verglichen wird, und eine zweite Risikostufe eines Mangels an Bodenkontakt eingeschätzt wird, indem der Bezugswert $V_r$ mit einem zweiten Schwellenwert $S^2$ verglichen wird, wobei das Risiko der zweiten Stufe höher ist als das Risiko der ersten Stufe.

**EP 1 932 734 B1**

**RÉFÉRENCES CITÉES DANS LA DESCRIPTION**

**Documents brevets cités dans la description**

- WO 03066399 A
- WO 03066400 A
- WO 2004000620 A
- US 5502433 A